# EUROPEAN PATENT APPLICATION

(11) **EP 1 914 417 A2**
(43) Date of publication of application: **23.04.2008**
(21) Application number: 07112630.4
(22) Date of filing: 17.07.2007
(51) Int. Cl.: F02M 37/22

(54) **Filter for internal combustion engines**

(30) Priority: 16.10.2006 IT TO20060744
(71) Applicant: All Consulting S.r.l., 37060 Mozzecane (VR) (IT)
(72) Inventor: Tavella, Andrea, 37060, Mozzecane (Verona) (IT)
(74) Representative: Marchitelli, Mauro

(57) **Abstract**

The present invention relates to a filter for fuels for internal-combustion engines, comprising an outer casing (3), which defines a chamber, housed within which are means for filtering the fuel (8) and which comprises an area for collection (2) of the water separated off from the fuel. Set in a position corresponding to said area is a sensor device (10) comprising first sensor means (14b, 13c; 22; 27b) for measuring the level of the water in the water-collection area (2) and second sensor means (19; 23; 29), for measuring a physical characteristic of the liquid contained within the aforesaid chamber. The sensor device (10) comprises a connector member (9; 24) having an elongated stem (13; 25) carrying first electrical contacts (14b, 13b; 15b, 15b'; 27), associated to the first sensor means (14b, 13c; 22b; 27b), and second electrical contacts (15b, 15b'; 14b, 13c; 26), associated to the second sensor means (19; 23; 29). The first and second electrical contacts (14b, 13b; 15b, 15b'; 27), (15b, 15b'; 14b, 13b; 26) have respective electrically accessible portions on an outer surface of the connector member for direct electrical contact with the liquid contained in the aforesaid chamber and/or for establishing an electrical contact with respective terminals (19c; 23b, 22c; 29b) of sensor elements (19; 23, 22b; 29) separated from the connector member (9; 24).

## Description

The present invention relates to a filter for fuels for internal-combustion engines, which comprises an outer casing defining a chamber, housed within which are means for filtering the fuel, the casing having at least one inlet for the fuel to be filtered and at least one outlet for the filtered fuel, the aforesaid chamber comprising an area for collection of water that is separated off from the fuel, in which the outer casing is provided with an opening in a position corresponding to the area for collection of water, the filter moreover comprising a sensor device having a first part set within the water-collection area and a second part extending on the outside of the filter through the aforesaid opening, said sensor device comprising first sensor means for measuring the level of the water in the aforesaid water-collection area and second sensor means for measuring a physical characteristic of the liquid contained within the aforesaid chamber, the sensor device comprising a connector member having an elongated stem carrying first electrical contacts associated to the aforesaid first sensor means and second electrical contacts associated to the aforesaid second sensor means.

A filter of this type is, for example, described in the patent No. EP 1 567 762.

The current trend in the production of filters for motor vehicles is to add components for control, such as, for example, temperature sensors, pressure sensors, water-level sensors, etc., which will be integrated in the filter and will present a contained cost to enable their replacement together with the filter.

The filter known from the document No. EP 1 567 762 envisages a sensor device that comprises a water-level sensor constituted by a float slidably mounted on a guide stem set within the water-collection chamber, the float having a magnet that interacts with a magnetic-field sensor housed on the stem. Also housed within the stem is a temperature sensor. The sensor device just described comprises a large number of elements and has a complex structure, production of which entails costs that are too high to justify its complete replacement during normal maintenance operations.

The purpose of the present invention is hence to provide a filter that envisages a sensor device that is simpler and characterized by more contained production costs.

In order to achieve the above purpose, the present invention envisages a filter according to the preamble of Claim 1 and is characterized in that the aforesaid first and second electrical contacts have respective electrically accessible portions on an outer surface of the connector member for direct electrical contact with the liquid contained in said chamber and/or for establishing an electrical contact with respective terminals of sensor elements separated from said connector member.

The connector member according to the invention is very simple from the constructional standpoint and at the same time guarantees considerable flexibility in the choice of the sensor means to be used within the chamber defined in the casing. The stem in fact constitutes a support that can be coupled to sensor means of different types and configurations, according to the design requirements to be met in the individual cases.

The characteristics of the present invention will emerge clearly in the course of the ensuing detailed description, which is provided purely by way of nonlimiting example, with reference to the attached plates of drawings, wherein:
- Figure 1 is a cross-sectional view of the filter according to a first embodiment of the invention;
- Figure 2 is a cross-sectional view of a detail of the filter representing the sensor device in a first embodiment;
- Figure 3 shows the sensor device of Figure 2 without the connector member;
- Figure 4 shows the connector member of the sensor device of Figure 2;
- Figure 5 is a cross-sectional view of a detail of the filter representing the sensor device in a second embodiment;
- Figure 6 shows the sensor device of Figure 5 without the connector member;
- Figure 7 shows the sensor device according to a third embodiment;
- Figure 8 shows the connector member of the sensor device of Figure 7; and

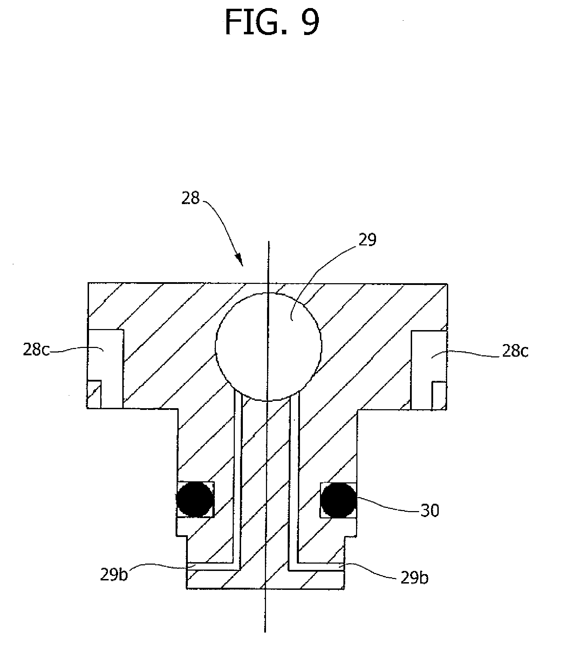

- Figure 9 shows an element of the sensor device of Figure 7.

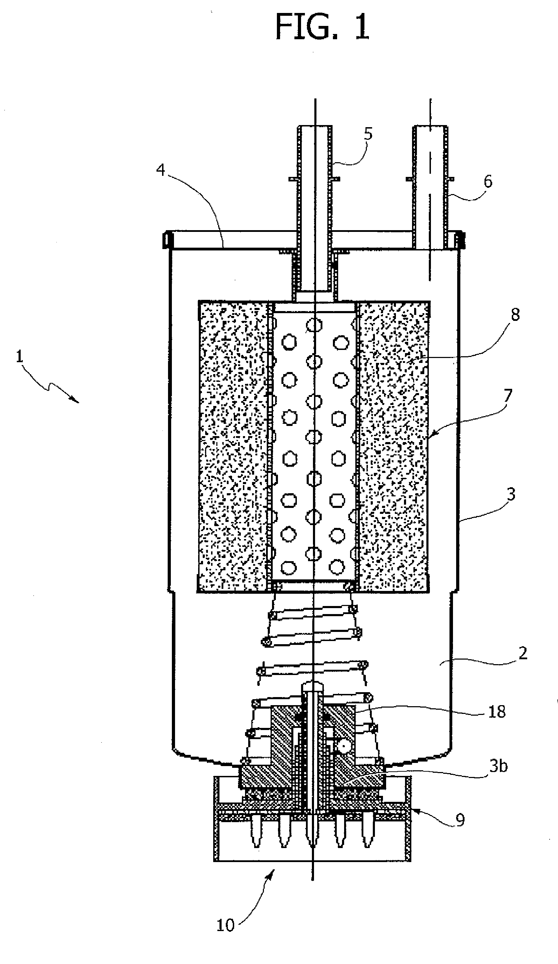

Shown in Figure 1 is a filter 1 for fuels for internal-combustion engines, which comprises a casing 3 having a substantially cylindrical shape, closed at the top by a lid 4. The lid 4 comprises two pipes 5, 6 that set in communication the outside with the inside of the casing 3, the pipe 5 extending coaxially to the casing 3. The casing 3 comprises inside it a cartridge 7 provided with a filtering element 8 having a tubular shape. The cartridge 7 has a mouth that connects the pipe 5 to the internal portion of the filtering element 8.

The bottom portion of the casing 3 comprises an area for water collection 2, in which the water that is separated from the fuel by means of the filtering element 8 accumulates.

The conformation described above is known and conventional in this field.

In a position corresponding to the water-collection area 2, the casing 3 is provided with an opening 3b, through which a sensor device 10 gives out into the filter 1.

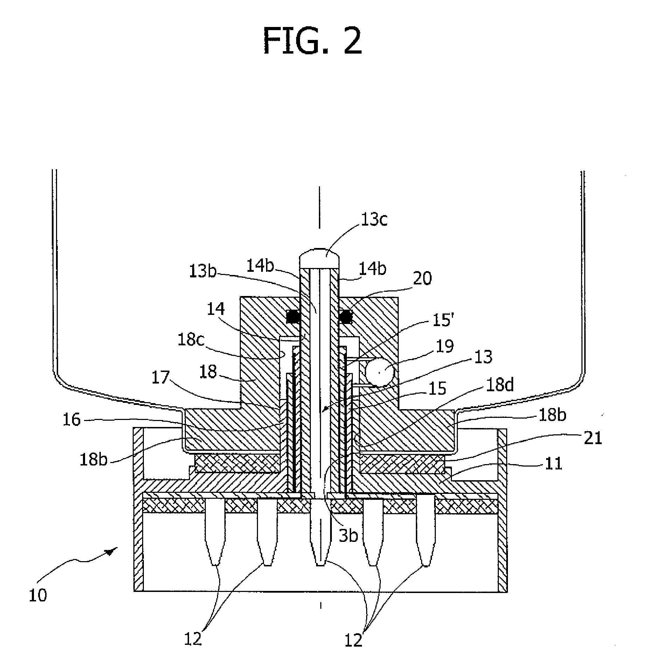

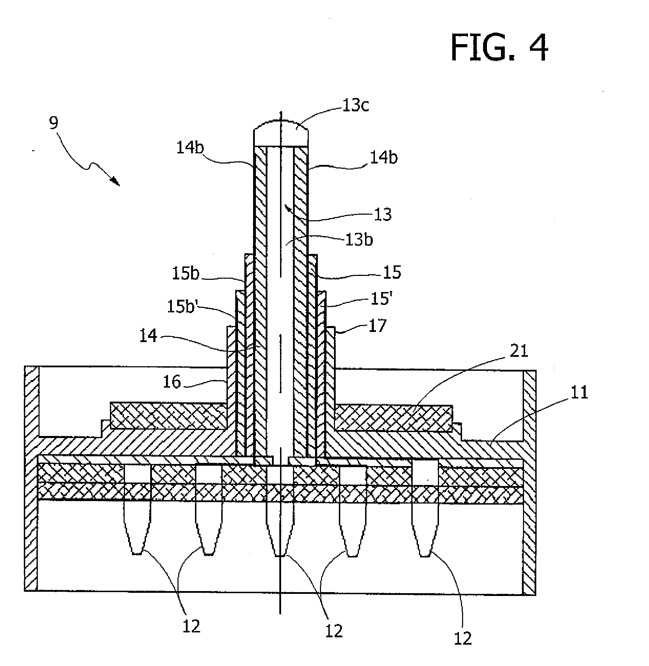

Figure 2 shows a first embodiment of the sensor device 10 according to the invention. It comprises a connector member 9 (Figure 4) provided with a base 11, on one side of which are set pins 12, designed to connect the sensor device electrically with electrical connections, which are located in the seat for housing the filter in the vehicle. On the opposite side of the base 11, an elongated stem 13 extends perpendicularly to said base. The stem 13 comprises an inner core made of metal 13b, which extends from the base 11 in a position corresponding to a pin 12 with which it is in contact (in the figures, this corresponds to the central pin), and that terminates at the top with a widened portion 13c defining the top end of the stem 13. The core 13b is surrounded by a tubular portion 14 made of plastic material, the outer surface of which is coated with a conductive material 14b. The core 13b and the coating 14b, which are both made of conductive material, define electrical contacts and are electrically insulated from one another through the wall made of plastic material of the tubular portion 14.

Two tubular elements 15, 15', made of plastic material, are set coaxially on the stem 13 and have respective external coatings 15b, 15b' made of conductive material. The coatings 15b, 15b' define further electrical contacts and are electrically insulated from one another and from the aforesaid coating 14b, by means of the walls made of plastic material of which the same tubular elements 15, 15' are made.

The coatings 14b, 15b, and 15b' are electrically connected to respective pins 12.

The base 11 is provided with a tubular portion 16, which surrounds the stem 13 and the tubular elements 15, 15' and is provided with an external thread 17.

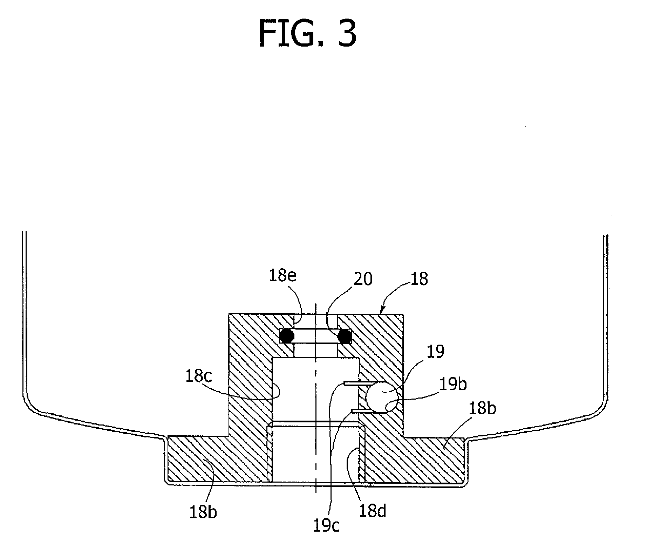

The sensor device 10 moreover comprises a supporting member 18 made of plastic material, which is set within the water-collection area 2, as illustrated in Figure 3. The supporting member 18 has a substantially tubular configuration and is provided at its bottom end with a circular flange 18b, which defines a resting area that is inserted and fixed in a seat having a shape complementary to the bottom portion of the casing 3. The supporting member 18 has a seat 18c designed to receive the stem 13 and provided, at the bottom, with an internal thread 18d, which couples with the external thread 17 of the connector 9, connecting the latter to the supporting member 18. The top portion of the supporting member 18 is provided with a through hole 18e, through which the top end of the stem 13 extends so that the top end of the stem 13 gives out into the collection chamber 2. An annular gasket 20 is comprised in the interface between the stem 13 and the wall of the hole 18e.

The supporting member 18 comprises a cavity 19b, set within which is a temperature sensor 19. Said temperature sensor 19 has terminals 19c that extend within the seat 18c in such a way as to set themselves in contact one with the coating 15b and one with the coating 15b'. The sensor 19 and the respective terminals 19c can be obtained via co-moulding with the supporting element 18, or else may be inserted from outside, and then mounted after moulding of the support 18.

The tightness of the gasket 20 is of fundamental importance for operation of the sensor device 10 in so far as any infiltration of water within the seat 18c would put the device out of service on account of the short-circuits that would be generated in the case where the water were to come into contact with the electrical connections housed within the seat 18c.

A further gasket 21 is provided in a position corresponding to the opening 3b, between the casing 3 and the connector 9.

In the operation of the sensor device 10 according to the embodiment just described, the widened portion 13c and the coating 14b define electrodes for detecting the presence of water. In fact, both of these give out into the collection chamber 2, and the water accumulated in the latter, once it reaches a predetermined level, where it comes into contact with the widened portion 13c and with the coating 14b, closes, thanks to its dielectric properties, an electrical circuit, generating a signal that is transmitted to an electrical card (not illustrated) through the pins 12 connected to the core 13b and to the coating 14b, respectively. The electrical card processes the signal and warns the user that a predetermined level of the water within the collection chamber 2 has been reached.

The sensor 19 detects instead the temperature of the liquid contained within the chamber defined by the casing 3. It generates an electrical signal that is transmitted to the electrical card thanks to the electrical circuit comprising the coatings 15b, 15b', the terminals 19c of the temperature sensor 19, and respective pins 12.

The sensor 19 may be any other sensor designed to detect a physical characteristic of the liquid contained within the chamber of the filter. For example, the sensor 19 can be a pressure sensor, and in this case it is set facing the inside of the aforesaid chamber defined by the casing 3.

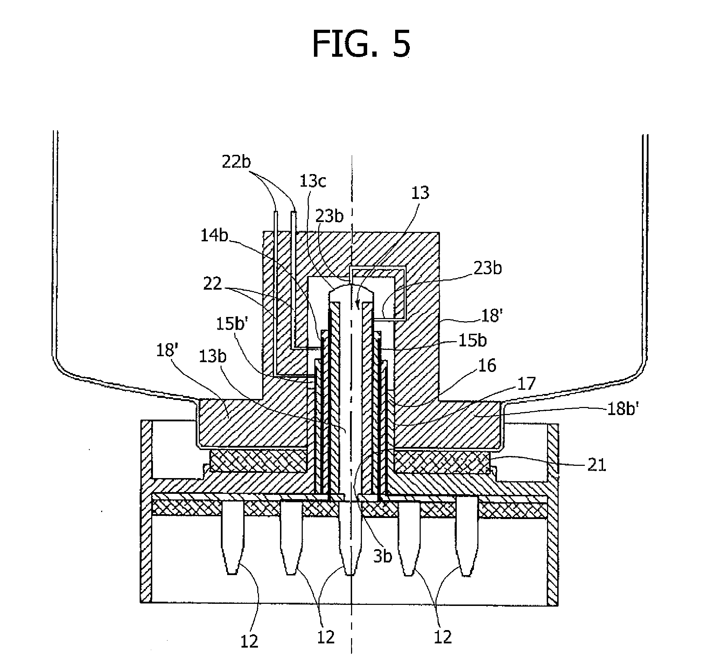

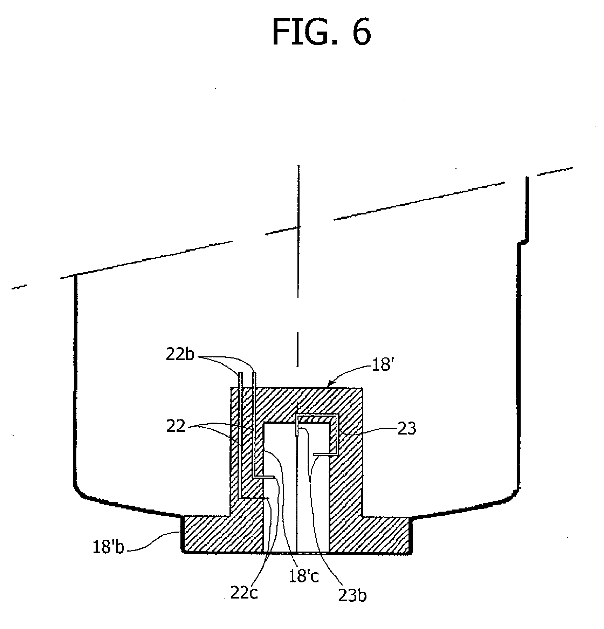

Figure 5 illustrates a second embodiment of the sensor device of the filter according to the invention. In this case, as may be seen in Figure 6, the supporting member 18' has a longer tubular portion and a non-perforated top portion in order to cover, within the seat 18c', the stem 13 of the connector of Figure 4 entirely.

The supporting member 18' moreover comprises electrical connectors 22 having first ends 22b that project within the water-collection area 2, and second ends 22c facing the inside of the seat 18'c. The supporting member 18' moreover has a temperature sensor 23 provided with connection terminals 23b. As may be seen in Figure 5, when the connector 9 of Figure 4 is connected to the supporting member 18' of Figure 6, the electrical connectors 22 set themselves in contact, one with the coating 15b and one with the coating 15b', whilst the terminals 23b come into contact, one with the widened portion 13c and one with the coating 14b. Also in this case, the sensor 23 and the connectors 22 can be obtained via co-moulding with the supporting element 18', or else may be inserted from outside and then mounted after moulding of the support 18'.

In the operation of the sensor device 10 of this embodiment, the ends 22b define electrodes for detecting the presence of water, which, facing the inside of the collection chamber 2, signal to the electrical card the fact that a predetermined level of the water accumulated has been reached, exploiting the dielectric properties of the water, via which they close the electrical circuit comprising the connectors 22, the coatings 15b, 15b', and the respective pins 12.

The sensor 23 detects, instead, the temperature of the liquid contained in the chamber of the filter, the signal generated being transmitted to the electrical card via the electrical circuit formed by the metal core 13b, the coating 14b and the respective pins 12.

As illustrated above, the connector 9 provides a support for sensor means, which is designed to connect the latter electrically with the outside of the filter and which, as emerges from the embodiments described above, can be coupled to the sensor means according to different configurations. The present invention moreover envisages that the supporting member 18, 18' can comprise sensor means of a different type, designed to detect any particular physical characteristic of the liquid contained in the chamber defined by the casing 3.

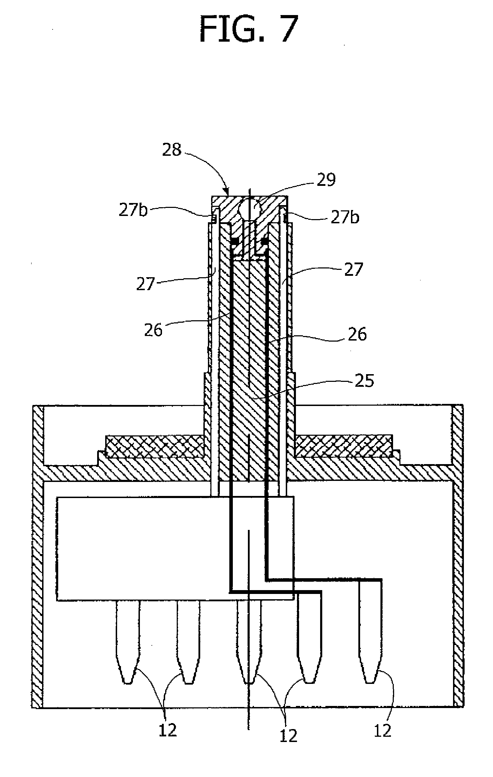

Represented in Figure 7 is a third embodiment of the sensor device of the filter according to the invention.

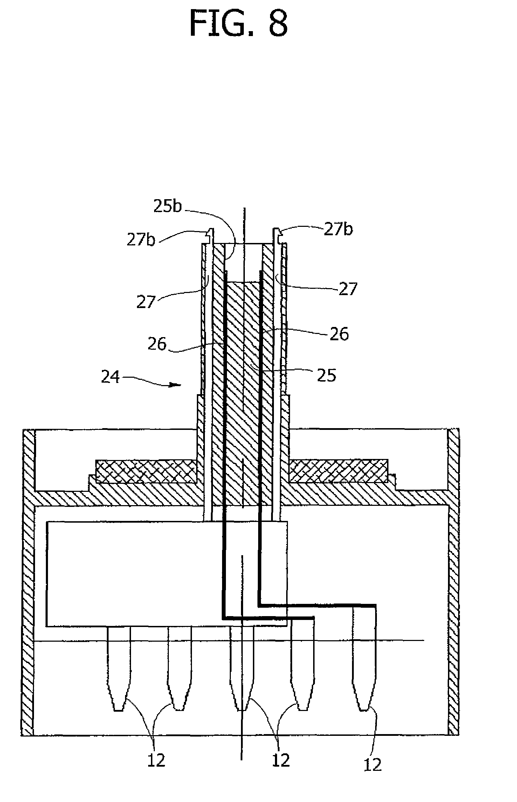

The connector element 24 of this third embodiment is illustrated in detail in Figure 8. In this type of solution, first electrical contacts 27 are constituted by two electrical connectors that extend parallel through the stem 25, and second electrical contacts 26 are likewise constituted by two further electrical connectors that run parallel to the first electrical contacts, on the inner side of the latter. The connectors of the first and second electrical contacts 27, 26 are separated from one another by walls of the stem made of plastic material.

The top end of the stem is provided with a cavity 25b, within which there comes to reside a head element 28, provided with a sensor 29 designed to detect a physical characteristic of the liquid contained within the chamber of the casing 3. Said sensor 29 may, for example, be a temperature sensor or a pressure sensor.

The first electrical contacts 27 have hook-shaped ends 27b, which project beyond the top end of the stem 25. When the head element 28 is coupled to the cavity 25b, the hook-shaped ends 27b of the first electrical contacts 27 come to set themselves in corresponding seats 28c of the head element 28, securing the latter to the stem 25. The ends 27b moreover project partially from the seats 28c in such a way as to emerge on the top region of the water-collection area 2 and thus be used as electrodes for detecting the presence of water according to the operation already described for the other two embodiments. The head element 28 is moreover provided with terminals 29b, which connect the sensor 29 to the first electrical contacts 26, the latter giving out onto the cavity 25b, within which the head element 28 comes to reside.

In a position corresponding to the portion of the head element 28, which interfaces with the internal wall of the cavity 25b, a gasket 30, such as, for example, an O-ring, is provided to prevent any infiltration of water into the cavity 25b that might damage the sensor device 10.

The head element 28 can have shapes of a different kind, which are chosen in the design stage according to the configurations of the sensor means that are necessary for meeting the requirements of the specific applications.

Of course, without prejudice to the principle of the invention, the details of construction and the embodiments may vary widely with respect to what is described and illustrated herein purely by way of example.

## Claims

1. A filter for fuels for internal-combustion engines, comprising an outer casing (3) defining a chamber, housed within which are means for filtering the fuel (8), the casing (3) having at least one inlet (5, 6) for the fuel to be filtered and at least one outlet (5, 6) for the filtered fuel, said chamber comprising an area (2) for collection of the water separated off from the fuel, in which the outer casing (3) is provided with an opening (3b) in said water-collection area (2), said filter moreover comprising a sensor device (10) having a first part set within the water-collection area (2) and a second part extending on the outside of the filter through said opening (3b), said sensor device (10) comprising first sensor means (13c, 14b; 22b; 27b) for measuring the level of the water in said water-collection area (2), and second sensor means (19; 23; 29) for measuring a physical characteristic of the liquid contained within said chamber, said sensor device (10) comprising a connector member (9; 24) having an elongated stem (13; 25) carrying first electrical contacts (13b, 14b; 15b, 15b'; 27), associated to said first sensor means (13c, 14b; 22b; 27b), and second electrical contacts (15b, 15b'; 13b, 14b; 26), associated to said second sensor means (19; 23; 29),
said filter being **characterized in that** said first and second electrical contacts (13b, 14b; 15b, 15b'; 27), (15b, 15b'; 13b, 14b; 26) have respective electrically accessible portions on an outer surface of the connector member, for direct electrical contact with the liquid contained in said chamber and/or for establishing an electrical contact with respective terminals (19c; 23b, 22c; 29b) of sensor elements (19; 23, 22b; 29) separate from said connector member (9; 24).

2. The filter for fuels for internal-combustion engines according to Claim 1, **characterized in that** said first and second electrical contacts (13b, 14b; 15b, 15b'; 27), (15, 15b'; 13b, 14b; 26) are set coaxially with respect to said stem (13; 25).

3. The filter for fuels for internal-combustion engines according to Claim 1, **characterized in that** said second sensor means comprise a temperature sensor (19; 23; 29) provided with terminals (19c; 23b; 22c) in electrical contact with said portions accessible from outside of said second electrical contacts (15b, 15b'; 13b, 14b; 26).

4. The filter for fuels for internal-combustion engines according to Claim 3, **characterized in that** said first sensor means comprise electrodes for detecting the presence of water (13c, 14b; 27b) made in said portions accessible from outside of said first electrical contacts (13b, 14b; 27).

5. The filter for fuels for internal-combustion engines according to Claim 3, **characterized in that** said first sensor means comprise electrodes for detecting the presence of water (22b), provided with terminals (22c) in electrical contact with said portions accessible from outside of said first electrical contacts (15b, 15b').

6. The filter for fuels for internal-combustion engines according to Claim 5, **characterized in that** said first and second sensor means (22, 23) are set on a supporting member (18'), housed in said water-collection area (2).

7. The filter for fuels for internal-combustion engines according to Claim 4, **characterized in that** said second sensor means (19), are set on a supporting member (18), housed in a position corresponding to said water-collection area (2).

8. The filter for fuels for internal-combustion engines according to Claim 6 or Claim 7, **characterized in that** said supporting member (18; 18') envisages a seat (18c; 18'c), emerging on which are said terminals (19c; 23b, 22c), said stem (13) being inserted within said seat (18c; 18'c) in such a way that said terminals (19; 23b, 22c) come into electrical contact with said portions (15b, 15b'; 13c, 14b, 15b, 15b') accessible from outside provided on said stem (13).

9. The filter for fuels for internal-combustion engines according to Claim 1, **characterized in that** said second sensor means comprise a pressure sensor.

10. The filter for fuels for internal-combustion engines according to Claim 1, **characterized in that** said stem comprises an inner metal core (13b) surrounded by a tubular portion (14), the outer surface of which is provided with a coating made of conductive material (14b), said core (13b) and said coating made of conductive material (14b) defining said first or second electrical contacts.

11. The filter for fuels for internal-combustion engines according to Claim 10, **characterized in that** tubular elements (15, 15') are set coaxially on the stem (13) and have respective external coatings (15b, 15b') made of conductive material, said coatings (15b, 15b') defining said first or second electrical contacts.

12. The filter for fuels for internal-combustion engines according to Claim 4, **characterized in that** said stem (25) comprises: first electrical connectors (27), which extend parallel through said stem (25), said first electrical connectors (27) defining said first electrical contacts; and second electrical connectors (26), which run parallel to the first electrical connectors (27) on the inner side of the latter, said second electrical connectors (27) defining said second electrical contacts, the connectors of said first and second electrical connectors (27, 26) being separated from one another by portions of said stem made of insulating material.

13. The filter for fuels for internal-combustion engines according to Claim 12, **characterized in that** second sensor means (29), are set on a head element (28), which is received in a cavity (25b) of said stem (25).

14. The filter for fuels for internal-combustion engines according to Claim 13, **characterized in that** said first electrical connectors (27) have hook-shaped ends that can be coupled to corresponding seats (28c) made in the head element (28) in such a way as to secure said head element (28) on said stem (25).

15. A sensor device for filters for fuels for internal-combustion engines, comprising a portion of threaded coupling (16) for coupling with a threaded hole (18d) of the filter, in which said sensor device (10) comprises an elongated stem (13; 25) carrying first electrical contacts (13b, 14b; 15b, 15b'; 27) (13c, 14b; 22b; 27b) and second electrical contacts (15b, 15b'; 13b, 14b; 26), electrically insulated from one another,
said device being **characterized in that** said first and second electrical contacts (13b, 14b; 15b, 15b'; 27), (15b, 15b'; 13b, 14b; 26), have respective electrically accessible portions on a outer surface of the elongated stem (13; 25), for direct electrical contact with a liquid and/or for establishing an electrical contact with terminals (19c; 23b, 22c; 29b) of sensor means (19; 23, 22b; 29).

16. A filter for fuels for internal-combustion engines, comprising an outer casing (3) defining a chamber, housed within which are means for filtering the fuel (8), the casing (3) having at least one inlet (5, 6) for the fuel to be filtered and at least one outlet (5, 6) for the filtered fuel, said chamber comprising an area (2) for collection of the water separated off from the fuel, in which the outer casing (3) is provided with an opening (3b) in a position corresponding to said water-collection area (2), said filter moreover comprising a supporting member (18; 18'), set within the water-collection area (2), and having a substantially tubular configuration defining internally a seat (18c; 18c') that is able to receive an elongated stem (13), in which said supporting member (18; 18') comprises a housing seat (19b), within which there is set a sensor (19, 23) for measuring a physical characteristic of the liquid contained within said chamber, said sensor having terminals (19c, 23b), which extend within said seat (18c; 18c').

17. The filter according to Claim 16, **characterized in that** said supporting member (18) is provided, at the top, with a through hole (18e), through which said elongated stem (13) can give out into the collection chamber (2).

18. The filter according to Claim 16, **characterized in that** said supporting member (18') comprises a water-level sensor (22b), the terminals (22c) of which give out into said seat (18c').

19. The filter according to Claim 16, **characterized in that** said sensor (19, 23) is a temperature sensor.
